# EUROPEAN PATENT APPLICATION

(11) **EP 3 355 227 A1**
(43) Date of publication of application: **01.08.2018**
(21) Application number: 18151627.9
(22) Date of filing: 15.01.2018
(51) Int. Cl.: G06F 21/55

(54) **CHANGING THE DEPLOYMENT STATUS OF A PRE-PROCESSOR OR ANALYTIC**

(30) Priority: 27.01.2017 US 201715418458
(71) Applicant: Hewlett Packard Enterprise Development LP, Houston, TX 77070 (US)
(72) Inventor: BERESNA, Yolanta, Bristol, BS34 8QZ (GB); CASASSA MONT, Marco, Bristol, BS34 8QZ (GB); REINECKE, Philipp, Bristol, BS34 8QZ (GB)
(74) Representative: Arigita Lasheras, Jesús José

(57) **Abstract**

Example implementations relate to changing deployment statuses. An example implementation includes updating a data source data store comprising descriptors of available data sources, a pre-processor data store comprising descriptors of available pre-processors, or an analytic data store comprising descriptors of available analytics. A change request may be initiated responsive to a change in the data source data, pre-processor data, or analytic data and a deployment status of a pre-processor or an analytic may be changed responsive to the change request.

## Description

### BACKGROUND

Threat-detection systems aim to detect threats, such as malware, on enterprise systems by monitoring data. Malicious machine readable instructions may be deployed to devices in communication over a network and may exploit the vulnerabilities of a device, or a network of devices. If left undetected, malicious software may gather sensitive information, disrupt the general operations of a device, gain access to private computer systems, carry out undesired operations on a device, etc. Threat-detection systems are employed to detect malicious machine readable instructions before the operations of malicious machine readable instructions are executed, or to mitigate damage caused by operations of malicious machine readable instructions already executed.

### BRIEF DESCRIPTION OF THE DRAWINGS

Various examples will be described below with reference to the following figures. Like reference characters may refer to like parts throughout.
FIG. 1 is a block diagram illustrating a system according to some examples.
FIG. 2 is a flowchart illustrating a method according to some examples.
FIG. 3 is a block diagram illustrating a non-transitory computer-readable storage medium according to some examples.
FIG. 4 is a block diagram illustrating a system for changing the deployment status of a pre-processor or analytic according to some examples.
FIG. 5 is a block diagram illustrating another system for changing the deployment status of a pre-processor or analytic according to some examples.
FIG. 6 is a block diagram illustrating another system for changing the deployment status of a pre-processor or analytic according to some examples.

### DETAILED DESCRIPTION

Threat-detection systems may use pre-processors and analytics for detecting threats within a system. Specifically, probes spread throughout a network or system may collect data from various data sources. Pre-processors may be any combination of software and/or hardware and may pre-process data from a data source. In an example, the pre-processed data may be stored in a data store. An analytic may be any combination of software and/or hardware and may analyze the pre-processed data, e.g. from the data store, in order to detect potential threats. If an analytic detects a threat, an alert may be generated.

When a new data source or data type becomes available to a system, additional pre-processors or analytics may be utilized. Additionally, threat-detection systems may waste processing power and storage through implementation of less-efficient pre-processors or analytics or pre-processors or analytics that may no longer be used by the system for threat-detection. A data source may also be of a particular type or format, and a pre-processor or analytic configured to ingest data from a particular type or format may be incompatible with a data source of a different type or format. Accordingly, a threat-detection system may function more efficiently or more effectively by adaptively changing the deployment status of a pre-processor or analytic. Example implementations for adaptively changing the deployment status of a pre-processor or analytic are described.

The deployment status of a pre-processor or analytic may be changed such that a pre-processor or analytic is activated within a threat-detection pipeline, or deactivated from the threat-detection pipeline. A threat-detection pipeline, such as a data processing pipeline, may be a resource space, *e.g.* a dedicated space in memory, or a dedicated computational resource, allocated for pre-processing and analyzing data for threat-detection. A threat-detection pipeline may include any number of data sources subject to threat-detection, and data sources may be dynamically added or removed from the threat-detection pipeline.

Any number of pre-processors may be active in the threat-detection pipeline. When active in the threat-detection pipeline, a pre-processor may pre-process data in preparation for threat-detection analysis. For example, a pre-processor may parse, reformat, or otherwise clean up data such that the data may be properly formatted or organized for an analytic to ingest. In an example, a data store may be active in the threat-detection pipeline for storing the pre-processed data. Any number of analytics may also be active in the threat-detection pipeline. When active in the threat-detection pipeline, an analytic may analyze the pre-processed data to detect threats, or symptoms of threats, and/or issue alerts responsive to a detected potential threat. When a data store is available in the threat-detection pipeline, an analytic may retrieve data from the data store for ingestion. Thus, resource space may be dedicated to active pre-processors within the threat-detection pipeline and analytics within the threat-detection pipeline, and the activated pre-processors and analytics may be used for pre-processing and analyzing data from data sources available in the pipeline.

In the following description, for purposes of explanation, numerous specific details are set forth in order to provide a thorough understanding of the present systems and methods. For some examples, the present systems and methods may be practiced without these specific details. Also, the examples may be used in combination with each other.

The following terminology is understood to mean the following when recited by the specification or the claims. The singular forms "a," "an," and "the" mean "one or more." The terms "including" and "having" are intended to have the same inclusive meaning as the term "comprising."

Any of the processors discussed herein may include a microprocessor, a microcontroller, a programmable gate array, an application specific integrated circuit (ASIC), a computer processor, or the like. Any of the processors may, for example, include multiple cores on a chip, multiple cores across multiple chips, multiple cores across multiple devices, or combinations thereof. In some examples, any of the processors may include at least one integrated circuit (IC), other control logic, other electronic circuits, or combinations thereof. Any of the non-transitory computer-readable storage media described herein may include a single medium or multiple media. The non-transitory computer readable storage medium may comprise any electronic, magnetic, optical, or other physical storage device. For example, the non-transitory computer-readable storage medium may include, for example, random access memory (RAM), static memory, read only memory, an electrically erasable programmable read-only memory (EEPROM), a hard drive, an optical drive, a storage drive, a CD, a DVD, or the like.

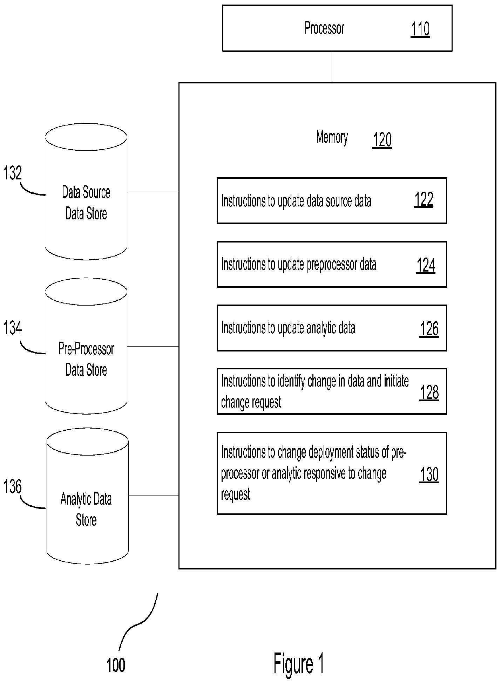

Data sources may be added or removed from a threat-detection pipeline. An example system is described for dynamically changing the deployment status of a preprocessor or analytic responsive to data sources being added or removed from a threat-detection pipeline. FIG. 1 is a block diagram illustrating an example system 100 for changing the deployment status of a pre-processor or analytic within the threat-detection pipeline. System 100 may include a processor 110 and a memory 120. System 100 may also include a data source data store 132 a pre-processor data store 134, and an analytic data store 136. The data source data store 132 may include descriptors of available data sources in a threat-detection pipeline. The pre-processor data store 134 may include descriptors of available pre-processors, including a deployment status of a pre-processor of the available pre-processors to indicate an active status of the pre-processor in the threat-detection pipeline. The analytic data store 136 may include descriptors of available analytics, including a deployment status of an analytic of the available analytics to indicate an active status of the analytic in the threat-detection pipeline.

The memory 120 may include instructions 122 executable by the processor 110 to update data source data in data source data store 132. In an example, the data source data may include descriptors of available data sources in the threat-detection pipeline. The descriptors for example, may include metadata or data otherwise associated with a data source, such as a name, type, format, location, etc., of the data source.

The memory 120 may also include instructions 124 executable by the processor 110 to update pre-processor data in pre-processor data store 134. The pre-processor data store 134 may be updated to account for any changes in the availability of a pre-processor, or any changes of descriptors of available pre-processors, including a change of a particular descriptor, or the addition of new descriptors. A pre-processor may be available to system 100 when the pre-processor may be activated or active within the threat-detection pipeline. The descriptors, for example, may include metadata or data otherwise associated with pre-processor data, such as a name, type, format, location, code, etc., of the pre-processor. A descriptor may also include a deployment status of a pre-processor of the available pre-processors. For example, the pre-processor data may include a deployment status of a pre-processor of the available pre-processors to indicate an active status of the pre-processor within the threat-detection pipeline.

The memory 120 may also include instructions 126 executable by the processor 110 to update analytic data in analytic data store 136. The analytic data store 136 may be updated to account for any changes in the availability of an analytic, or any changes of descriptors of available analytics, including a change of a particular descriptor, or the addition of new descriptors. An analytic may be available to system 100 when the analytic may be activated or active within the threat-detection pipeline, i.e. executing within the dedicated resource space. The descriptors, for example, may include metadata or data otherwise associated with analytic data, such as a name, type, format, location, code, etc., of the analytic. A descriptor may also include a deployment status of an analytic of the available analytics. For example, the analytic data may include a deployment status of an analytic of the available analytics to indicate an active status of the analytics in the threat-detection pipeline.

When a data source becomes available or unavailable within the threat-detection pipeline, the change may be reflected in the data source data store. Similarly, when a pre-processor or analytic changes deployment status with respect to the threat-detection pipeline, such as from active within the threat-detection pipeline to inactive, or vice versa, the change may be reflected in the pre-processor data store or the analytic data store respectively. Memory 120 may include instructions 128 to identify a change in the data source data, pre-processor data, or analytic data and initiate a change request responsive to the change in the data. In some examples, the execution of instructions 128 may form at least part of a driver for system 100, and other like examples of a driver may be described further herein below.

Example system 100 may dynamically adapt to changes reflected in the data stores of system 100, such as the data source data store, pre-processor data store, or analytic data store, by changing the deployment status of available pre-processors or available analytics. Memory 120 may include instructions 130 to change the deployment status of a pre-processor of the available pre-processors or the deployment status of an analytic of the available analytics responsive to the change in the data source data, pre-processor data, or analytic data. In some examples, the execution of instructions 130 may form at least part of an adaptation module for system 100, and other like examples of adaptation modules may be described further herein below. Accordingly, system 100 may dynamically adapt to system changes.

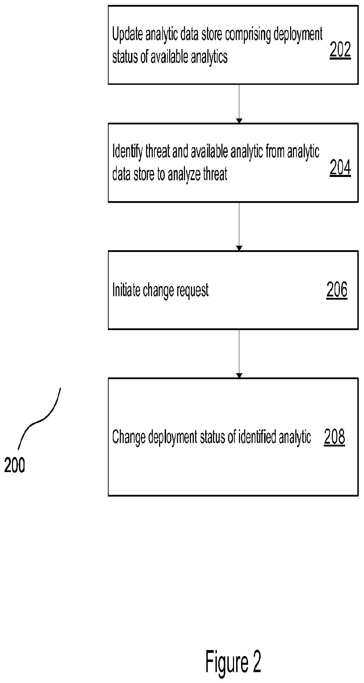

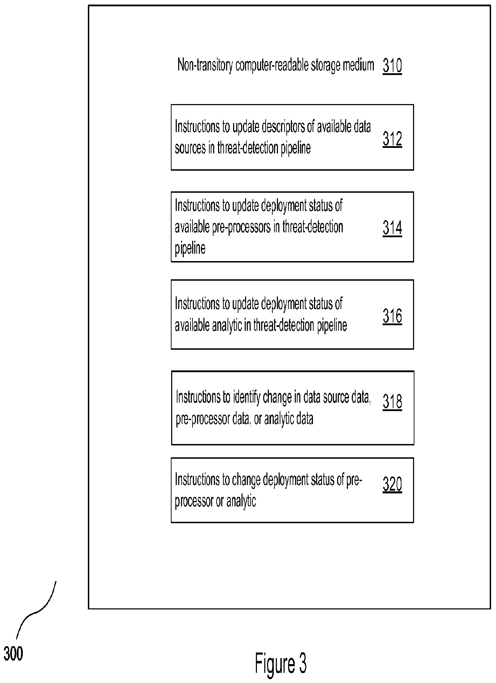

FIG. 2 is a flowchart 200 illustrating an example method for changing the deployment status of an analytic. The method may be implemented in the form of executable instructions stored on a computer-readable medium or in the form of electronic circuitry. For example, method 200 may be implemented by the instructions executable by the processor of the non-transitory computer-readable medium illustrated in FIG. 3 or by the processor of FIG. 1 executing the instructions of the system memory. The sequence of operations described in connection with FIG. 2 is not intended to be limiting, and an implementation consistent with the example of FIG. 2 may be performed in a different order than the example illustrated. Additionally, operations may be added or removed from the method 200.

At block 202, an analytic data store is updated. The analytic data store may include data comprising descriptors of available analytics, e.g. the name, type, format, location, code, etc., of an analytic. In an example, the descriptor may include a deployment status of an analytic of the available analytics. The deployment status may, for example, indicate whether the analytic is active or inactive within the threat-detection pipeline. The analytic data store may be updated periodically, in response to a change in configuration of the threat-detection system, etc. Thus, the analytic data store may dynamically log descriptors of available analytics.

By dynamically logging available analytics within the analytics data store, an analytic appropriate for responding to a particular threat may be identified, such as an analytic designed to analyze the particular threat type. At block 204, a threat may be identified and an available analytic may be identified from the analytic data store responsive to the identified threat. In an example, the available analytic may be identified as an analytic to be activated to analyze the identified threat. Conversely, the available analytic may be identified as an active analytic to be deactivated within the threat-detection pipeline. For example, the active analytic may be identified as not being used or not efficient for use to analyze the identified threat and the active analytic may be deactivated accordingly.

An identified threat may take the form of a threat model, which may define the states or phases in which an attack on a system may be conducted. A threat model may model the attack at various levels of abstraction. For example, a high-level model may model the overall state of an attack, and a low-level model may model the state of individual devices as a consequence of an attack.

A threat model may also describe attack actions that can be taken by an attacker in a particular state. For example, an attack action may include actions associated with local infection within a system, actions for malicious lateral movement from a compromised system towards other systems, *e.g.* multiple login attempts or anomalous logins, actions for outgoing/incoming communications with a remote malicious command and control system, etc. In an example, a threat model may correspond to different hypotheses about the state of a particular attack and at any point in time there may be different attack models corresponding to different hypotheses about the state of a particular attack.

The deployment status of the identified analytic may be changed responsive to the identified threat. At block 206, a change request may be initiated. In an example, the initiated change request is sent to an adaptation module to change the deployment status of the identified analytic. At block 208, the deployment status of the identified analytic is changed responsive to the change request. In an example, the deployment status of the identified analytic is changed from inactive to active within the threat-detection pipeline when the identified analytic is identified as being appropriate or efficient for analyzing the identified threat. In an example, the deployment status of the identified analytic is changed from active within the threat-detection pipeline to inactive when the identified analytic is identified as being inappropriate or inefficient for analyzing the identified threat, e.g. an analytic not designed to analyze the particular threat type, an analytic using memory or computational resources greater than a threshold to analyze the identified threat, an analytic exhibiting a false positive rate greater than a threshold, etc. In an example, the deployment status of the identified analytic is changed from active within the threat-detection pipeline to inactive when the identified analytic is identified as being less appropriate or less efficient for analyzing the identified threat than a different available analytic. Accordingly, the deployment status of an analytic, or the deployment status of a pre-processor and an analytic, may be changed upon identification of a threat.

In an example, the deployment status of a pre-processor may be changed responsive to changing the deployment status of an analytic when there is a corresponding relationship between the pre-processor and the analytic. For example, when the deployment status of an analytic is changed from inactive to active within the pipeline, the deployment status of a corresponding pre-processor may be changed from inactive to active to pre-process data digestible for the activated analytic. In an example, the activated analytic calls for pre-processed data of a particular type, such as a particular format, that the activated pre-processor can output. In another example, a particular analytic is dependent upon a particular pre-processor such that a change in deployment status of the particular analytic or particular pre-processor results in a deployment status change of its pair.

FIG. 3 illustrates a block diagram 300 of an example non-transitory computer-readable storage medium 310 for changing the deployment status of a pre-processor or analytic. The non-transitory computer-readable storage medium 310 may include instructions 312 executable by a processor to update data source data in a data source data store of a threat-detection system. In an example, the data source data may include descriptors of available data sources within a threat-detection pipeline.

The non-transitory computer-readable medium 310 may also include instructions 314 executable by a processor to update pre-processor data in a pre-processor data store. In an example, the pre-processor data may comprise descriptors of available pre-processors within the threat-detection pipeline, including a deployment status of a pre-processor of the available pre-processors.

The non-transitory computer-readable storage medium 310 may also include instructions 316 executable by a processor to update analytic data in an analytic data store. In an example, the analytic data may comprise descriptors of available analytics within the threat-detection pipeline, including a deployment status of an analytic of the available analytics.

A change in availability of a data source in a threat-detection pipeline may be reflected in the data source data store. Similarly, when a pre-processor or analytic changes deployment status with respect to the threat-detection pipeline, the change may be reflected in the pre-processor data store or the analytic data store respectively. The non-transitory computer-readable storage medium 310 may include instructions 318 for identifying a change in the data source data, pre-processor data, or analytic data. The non-transitory computer-readable storage medium 310 may also include instructions 320 for changing the deployment status of a pre-processor or the deployment status of an analytic.

In some examples, the change in the data source data, pre-processor data, or analytic data may be a data source data, pre-processor, or analytic being activated or deactivated in the threat-detection pipeline. In addition, the deployment status change may be a change of the pre-processor of the available preprocessors or the analytic of the available analytics from inactive to active within the threat-detection pipeline, or active to inactive within the threat-detection pipeline.

In some other examples, the non-transitory computer-readable storage medium 310 may further include instructions executable by the processor to update performance data comprising quality data of active analytics of the available analytics.

In other examples, non-transitory computer-readable storage medium 310 may further include instructions executable by the processor to identify a change in the performance data corresponding to a failure to meet a performance threshold, and change the deployment status of the pre-processor of the available pre-processors or the analytic of the available analytics based on the change in the performance data.

In other examples, the data source data store may be updated responsive to a data source being activated in the threat-detection pipeline or a data source active in the threat-detection pipeline being deactivated.

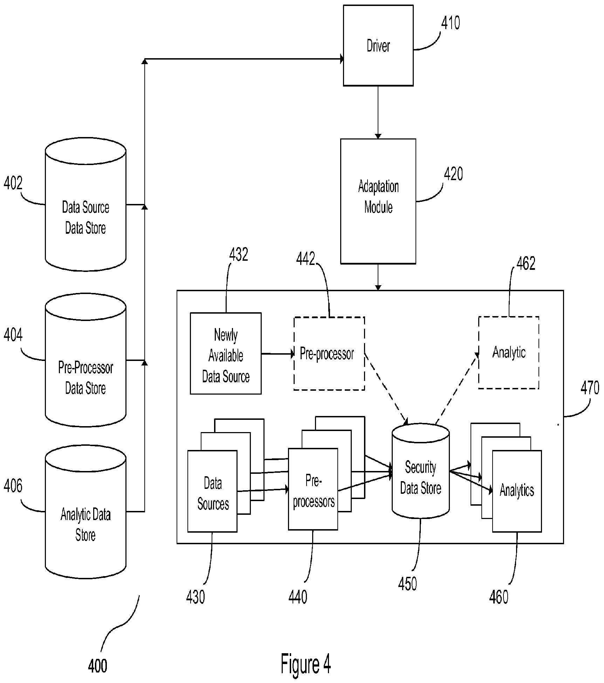

FIG. 4 is an example system 400 for dynamically changing the deployment status of a pre-processor or the deployment status of an analytic. Specifically, a threat-detection pipeline 470 is provided for threat detection, in this example as an allocated computational resource space for pre-processing data of available data-sources and analyzing the pre-processed data for threat-detection. Data sources 430 are included in the threat-detection pipeline, as well as active pre-processors 440 to pre-process the data from data sources 430. In this example, for purposes of clarity, a single pre-processor is shown to receive data from a single data source, such that each pre-processor of the active processors 440 is paired with a data source of the available data sources 430. However, a pre-processor may take in data from any number of data sources.

The active pre-processors 440 in threat-detection pipeline 470 receive input data from available data sources 430 in threat-detection pipeline 470 and pre-process the input data. Specifically, pre-processors 440 may parse, reformat, or otherwise clean up data such that the data may be ingested and analyzed by an analytic. In this example, security data store 450 is provided in threat-detection pipeline 470 for storing the pre-processed data output of pre-processors 440.

Analytics 460 are also provided as active within threat-detection pipeline 470. When active in the threat-detection pipeline, analytics 460 may analyze data to detect threats, or symptoms of threats, and/or issue alerts responsive to a detected potential threat. In an example, analytics 460 ingest data from security data store 450 for threat-detection analysis. Accordingly, data within threat-detection pipeline 470 is pre-processed by active pre-processors 440 and analyzed for threats by active analytics 460.

Data stores are provided for logging descriptors of available data sources, pre-processors, and analytics. Specifically, data source data store 402 is provided for logging metadata or data otherwise associated with a data source, such as a name, type, format, location, etc., of the data source. Additionally, pre-processor data store 404 may be provided for logging descriptors of available pre-processors in the threat-detection pipeline. A pre-processor may be available to the system when the pre-processor may be later activated or is currently active within threat-detection pipeline 470. Pre-processor descriptors may include metadata or data otherwise associated with pre-processor data, such as a name, type, e.g. type of data source or analytic the pre-processor is compatible with, format, location, code, etc., of the pre-processor. A descriptor may also include a deployment status of a pre-processor of the available pre-processors. For example, the pre-processor data may include a deployment status of a pre-processor of the available pre-processors to indicate an active status of the pre-processor in threat-detection pipeline 470.

Analytic data store 406 may be provided for logging descriptors of available analytics in threat-detection pipeline 470. An analytic may be available to the system when the analytic may be later activated or currently active within threat-detection pipeline 470. Analytic descriptors may include metadata or data otherwise associated with analytic data, such as a name, type, e.g. type of data source or pre-processor the analytic is compatible with, format, location, code, etc., of the analytic. A descriptor may also include a deployment status of an analytic of the available analytics. For example, the analytic data may include a deployment status of an analytic of the available analytics to indicate an active status of the analytic in threat-detection pipeline 470.

Each of the data stores, 402, 404, and 406, respectively, may be updated e.g. systematically or periodically, such that any changes to the descriptors of available data sources may be represented in the data source data store 402, any changes to the descriptors of available pre-processors may be represented in the pre-processor data store 404, and any changes to the descriptors of available analytics may be represented in the analytic data store 406. In an example, the data sources available within threat-detection pipeline 470, or the pre-processors or analytics active within threat detection pipeline 470, may be represented within the data source data store, 402, pre-processor data store 404, and analytic data store 406, respectively.

A processor may execute instructions, such as through driver 410 in this example, and may be in communication with the data source data store 402, pre-processor data store 404, and analytic data store 406. The driver 410 may read data logged within the data stores and initiate a change request responsive to a change in the data source data, pre-processor data, or analytic data. For example, data source data store 402 may be updated to include a newly available data source within threat-detection pipeline 470, such as newly available data source 432, and driver 410 may initiate a change request responsive to data source 432 being newly available. As an additional example, a previously available data source within threat-detection pipeline 470 may become unavailable e.g. removed from threat-detection pipeline 470, or a previously active pre-processor or analytic may be removed from threat-detection pipeline 470. The change in status of the previously available data source from available to unavailable may be reflected in data source data store 402, and the change in status of the previously active pre-processor or analytic from active to inactive may be reflected in pre-processor data store 404 or analytic data store 406 respectively. Driver 410 may initiate a change request responsive to the status change of the previously available data source or the previously active pre-processor or previously active analytic.

Adaptation module 420 may be provided and may be in communication with driver 410. Adaptation module 420 may be executable instructions in memory, such as instructions 130 of FIG. 1. Specifically, adaptation module 420 may receive a change request from driver 410 and may change the deployment status of a pre-processor or analytic responsive to the change request. For example, driver 410 may initiate a change request responsive to data source 432 being newly available within threat-detection pipeline 470. Responsive to receiving the change request, adaptation module 420 may search for an inactive pre-processor of available pre-processors that shares a type with newly available data source 432, e.g. is compatible with the newly available data source, efficiently pre-processes data from the newly available data source, etc. In an example, adaptation module 420 may determine whether an available pre-processor is compatible with newly available data source 432 be retrieving a descriptor of the pre-processor from pre-processor data store 404, such as the code of the pre-processor or the pre-processor type, and comparing it to a descriptor of the newly available data source, e.g. a data source type, retrieved by adaptation module 420 from data source data store 402.

When a pre-processor sharing a type with newly available data source 423 is found, adaptation module 420 may change the deployment status of the inactive pre-processor of the available pre-processors to active in the threat-detection pipeline. Pre-processor 442 is an example pre-processor of the available pre-processors that may be activated in threat-detection pipeline 470 by adaptation module 420.

Similarly, adaptation module 420 may search for an inactive analytic of available analytics that shares a type with newly available data source 432 or newly available pre-processor 442, *e.g.* is compatible with the newly available data source or newly available pre-processor, efficiently analyzes data from data source 432 or pre-processed by pre-processor 442, etc. In an example, adaptation module 420 may determine whether an available analytic is compatible with newly available data source 432 be retrieving a descriptor of the analytic from analytic data store 406, such as the code of the analytic or the analytic type, and comparing it to a descriptor of the newly available data source, *e.g.* a data source type, retrieved by adaptation module 420 from data source data store 402.

When an analytic sharing a type with newly available data source 423 is found, adaptation module 420 may change the deployment status of the inactive analytic of the available analytics to active in the threat-detection pipeline. Analytic 462 is an example analytic of the available analytics whose deployment status may be changed to active in threat-detection pipeline 470 by adaptation module 420.

As an additional example, the change request initiated by driver 410 may be responsive to a newly available analytic as indicated by an update to analytic data store 406 for example. Responsive to the initiated change request, adaptation module 420 may change the deployment status of the newly available analytic to active.

Adaptation module 420 may also be aware of dependencies between data sources, pre-processors and analytics, such as available data sources 430, active pre-processors 440, and active analytics 460. Adaptation module 420 may be aware of these dependencies by, upon execution by a processor, retrieving descriptors of available pre-processors or available analytics from pre-processor data store 404 or analytic data store 406 respectively. In an example, adaptation module 420 may change the deployment status of a pre-processor of the available pre-processors to active. When activated, the pre-processor of the available pre-processors may pre-process data for a newly active analytic. For instance, a change request may be initiated by driver 410 and adaptation module 420 may change the deployment status of analytic 462 to active within threat-detection pipeline responsive to the change request. In addition to changing the deployment status of analytic 462, adaptation module 420 may change the status of pre-processor 442 to active within threat-detection pipeline 470 to pre-process data for analytic 462. Conversely, adaptation module 420 may not change the deployment status of analytic 462 responsive to the change request if adaptation module 420 cannot also make available a data source or activate a pre-processor that analytic 462 is dependent upon, and the data source or pre-processor on which analytic 462 is dependent upon is not already available or active within threat-detection pipeline 470.

In a further example, the change request initiated by driver 410 may be responsive to a previously available data source within threat-detection pipeline 470 becoming unavailable *e.g.* removed from threat-detection pipeline 470, or a previously active pre-processor or analytic removed from threat-detection pipeline 470. The adaptation module 420 may change the deployment status of a pre-processor of the active pre-processors 440 or an analytic of the active analytics 460 from active in the threat-detection pipeline 470 to inactive responsive to a change in the data source data, pre-processor data, or analytic data. For example, when a change in the data source data indicates that a previously available data source of the available data sources 430 within threat-detection pipeline 470 has become unavailable, the adaptation module 420 may change the deployment status of a pre-processor of the active pre-processors 440, or an analytic of the active analytics 460 from active to inactive, *e.g.* a pre-processor of the active pre-processors 440 or an analytic of the active analytics 460 that was previously operating on the data from the previously available data source. Resources may be inefficiently used when a pre-processor or analytic that was previously pre-processing or analyzing data from a now unavailable data source is kept active within the threat-detection pipeline. Thus, adaptation module 420 may increase the efficiency of threat detection within threat-detection pipeline 470 by changing the deployment status of the pre-processor or analytic that was previously operating on the now unavailable data source from active to inactive.

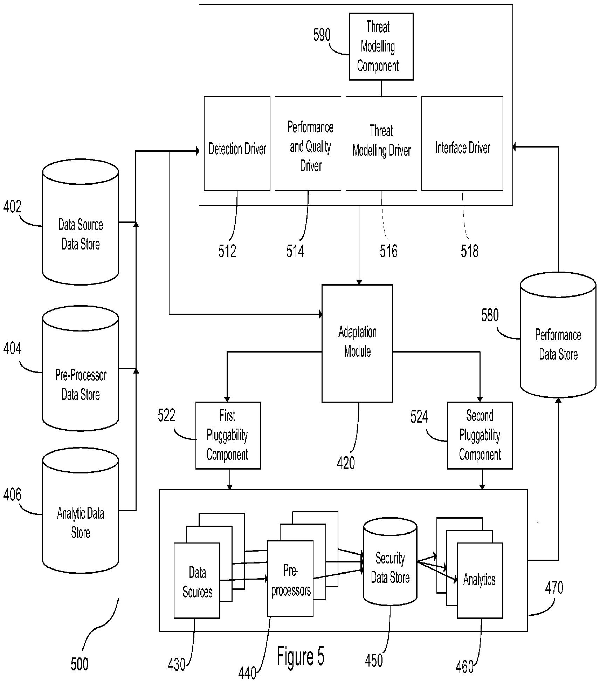

FIG. 5 is a block diagram illustrating an example system 500 for dynamically activating or inactivating pre-processors or analytics within a threat-detection pipeline. System 500 may include similar architecture to that of system 400. For clarity and conciseness, many of the components of system 500 may be described with reference to FIG. 4, including threat detection pipeline 470 and components within threat detection pipeline 470, such as available data sources 430, active pre-processors 440, security data store 450, and active analytics 460. Data source data store 402, pre-processor data store 404, analytic data store 406, and adaptation module 420 are also described with reference to system 400.

In addition to data source data store 402, pre-processor data store 404, and analytic data store 406, performance data store 580 is included in example system 500. Performance data store 580 may include performance data, such as quality data of active analytics of the available analytics 460. This quality data may include, for example, the false-positive rate of active analytics 460 in threat-detection pipeline 470. The quality data may also include a descriptor of an analytic in the form of a quality indicator for a particular analytic. In an example, the execution time for active pre-processors 440 or active analytics 460 in threat-detection pipeline 470 may be monitored and logged within performance data store 580. In another example, the memory consumed by a pre-processor or analytic being active within threat-detection pipeline 470 may be monitored and logged within performance data store 580.

Performance data store 580 may be updated periodically, systematically, etc. For example, performance data store 580 may be updated after the passing of an interval of time t. Performance data store 580 may also be updated after a change in the threat-detection pipeline of system 500, such as a change in availability of a data source within threat-detection pipeline 470, or a deployment status change of a pre-processor or analytic. Accordingly, performance data store 580 may log the efficiency of active pre-processors 440 or active analytics 460.

A plurality of example drivers are included in system 500, including detection driver 512, performance and quality driver 514, threat modelling driver 516, and interface driver 518. A driver may take the form of instructions in memory to be executed by a processor. Each of the drivers are described in detail below, and each driver is described below having discrete functionality. However, any number of drivers may be implemented and any number of drivers may employ any combination of the various functionality described below.

Detection driver 512 is an example driver for determining which pre-processors or analytics may be added or removed from threat-detection pipeline 470. Detection driver 512 may be in communication with any number of the described data stores, including data source data store 402, pre-processor data store 404, and analytic data store 406. Detection driver may monitor data logged within the various data stores, including available data sources within data source data store 402, available pre-processors within pre-processor data store 404, and available analytics within data store 406.

Detection driver 512 may detect, *e.g.* within data source data store 402, a newly available data source. In an example the newly available data source is detected responsive to an update to data source data store 402. Upon detection of a newly available data source, such as newly available data source 432 as illustrated in FIG. 4, detection driver 512 may search for an available pre-processor to operate on the newly available data source. In an example, detection driver 512, searches pre-processor data within pre-processor data store 404 for an available pre-processor. For instance, detection driver 512 may search within pre-processor data store 404 for an inactive pre-processor of the available pre-processors that shares a type with the newly available data source. In an example, when detection driver 512 detects an available pre-processor that can operate on the newly available data source, detection driver 512 initiates a change request. The change request may be transmitted to adaptation module 420 and adaptation module 420 may respond to this change request by changing the deployment status of the detected pre-processor from inactive to active in threat-detection pipeline 470.

In another example, detection driver 512 may detect, *e.g.* within analytic data store 406, a newly available analytic. In an example the newly available analytic is detected responsive to an update to analytic data store 406. Upon detection of the newly available analytic, detection driver 512 may initiate a change request. The change request may be transmitted to adaptation module 420 and adaptation module 420 may respond to this change request by changing the deployment status of the detected analytic from inactive to active in threat-detection pipeline 470.

In yet another example, detection driver 512 may detect, *e.g.* within data source data store 402, pre-processor data store 404, or analytic data store 406, a data source no longer available within threat-detection pipeline 470, or a pre-processor or analytic removed from threat-detection pipeline 470. When detection driver 512 detects a data source no longer available within threat-detection pipeline 470, detection driver 512 may initiate a change request to have a pre-processor previously pre-processing data from the no longer available data source or an analytic previously analyzing data from the no longer available data source removed from threat-detection pipeline 470. Responsive to the change request, adaptation module 420 may change the deployment status of the pre-processor of the available pre-processors 440 or the analytic of the available analytics 460 from active in threat-detection pipeline 470 to inactive.

In an example, when detection driver 512 detects that a pre-processor has been removed from pre-processor data store 406, *e.g.* the deployment status of the pre-processor is changed from active to inactive, detection driver 512 may initiate a change request to have an analytic previously analyzing data from the removed pre-processor removed from threat-detection pipeline 470. Responsive to the change request, adaptation module 420 may change the deployment status of the analytic of the available analytics 460 from active in threat-detection pipeline 470 to inactive. Similarly, when detection driver 512 detects that an analytic has been removed from analytic data store 408, *e.g.* the deployment status of the analytic is changed from active to inactive, detection driver 512 may initiate a change request to have a pre-processor previously pre-processing data for the removed analytic removed from threat-detection pipeline 470. Responsive to the change request, adaptation module 420 may change the deployment status of the pre-processor of the available pre-processors 440 from active in threat-detection pipeline 470 to inactive.

Performance and quality driver 514 is another example driver for determining which pre-processors or analytics may be added or removed from threat-detection pipeline 470. Performance and quality driver 514 may be in communication with any number of the described data stores, including performance data store 580. Performance and quality driver 514 may monitor data logged within the performance data store to optimize performance and threat-detection quality.

In an example, performance and quality driver 514 retrieves performance and quality data for a particular analytic from performance data store 580 by retrieving data samples over a time interval. For example, a particular analytic active in threat-detection pipeline 470 may analyze Domain Name System (DNS) traffic for anomalies that may pose a security threat. For such an analytic, data samples in performance data store 580 may include CPU-time samples to indicate the average CPU time consumed by executions of a particular analytic over a particular sample of data. Data samples in performance data store 580 may also include detection-quality samples to indicate the total number of alerts raised by the particular analytic over a particular sample of data.

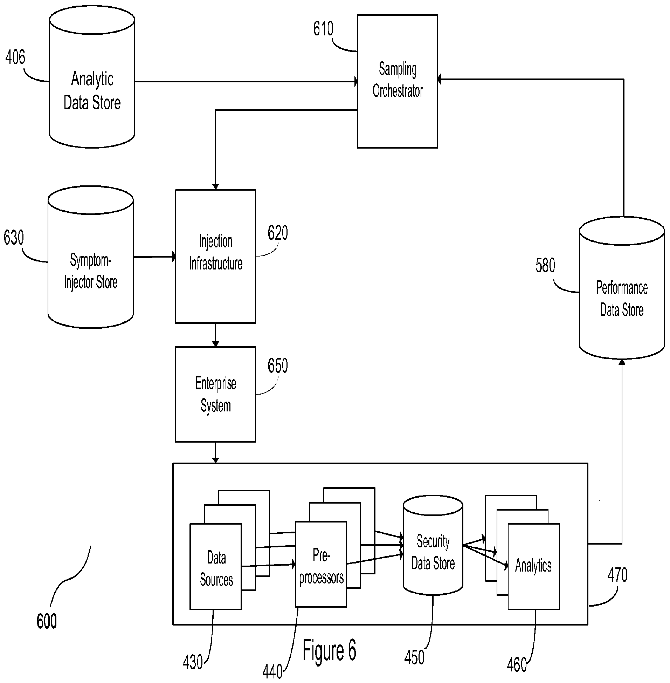

At any given time, there may not be enough data within performance data store 580 for performance and quality driver 514 to determine whether a particular analytic meets a performance threshold. FIG. 6 is an example system 600 for generating performance data for an analytic. System 600 may incorporate similar architecture to that of system 400 and system 500, and for purposes of clarity and conciseness, may be described with reference to components of system 400 and system 500, including threat-detection pipeline 470, data sources 430, active pre-processors 440, security data store 450, and active analytics 460, of system 400, and performance data store 580 of system 500.

System 600 further includes a sampling orchestrator 610 in communication with performance data store 580 for monitoring whether there is sufficient data within performance data store 580 to determine whether a particular analytic meets a performance threshold. When sampling orchestrator 610 determines that there is not sufficient data, *e.g.* to reliably compute performance and quality metrics for a particular analytic, sampling orchestrator 610 may initiate a symptom injection request. Sampling orchestrator may determine that there is not sufficient data for a particular analytic by a variety of methods. For example, when a particular analytic active in threat-detection pipeline 470 analyzes DNS traffic for anomalies, sampling orchestrator 610 may initiate a symptom injection request when the number of DNS alerts raised by the particular analytic falls below a threshold value. Sampling orchestrator 610 may also make a determination as to whether there is sufficient data through the implementation of statistical methods, *e.g.* confidence intervals, or time-series change-detection.

A symptom injection request may be received by injection infrastructure 620. Responsive to receiving an injection request, injection infrastructure 620 may run one or more symptom injectors. A symptom injector is data to be analyzed by active analytics 460, *e.g.* data having symptoms of a system attack, for the generation of additional data by analytics 460 to be stored within performance data store 580. The symptom injectors to be run, including parameters of the symptom injectors to be run, may be dependent on a received symptom injection request received and may be tailored to performance data for a particular analytic. For example, sampling orchestrator 610, responsive to determining that there is not sufficient data for a particular analytic, may retrieve a descriptor of the particular analytic from analytic data store 406, and may include instructions within the symptom injection request, including parameters of a symptom injector to be run, based on the retrieved descriptor.

In an example, the analytic with insufficient performance data as determined by sampling orchestrator 610 analyzes Domain Name System (DNS) traffic for anomalies that may pose a security threat. The descriptor retrieved by sampling orchestrator 610 from analytic data store 406 may be code of the analytic with insufficient data, and sampling orchestrator 610 may initiate a symptom injection request responsive to the code of the analytic with insufficient data. For example, the symptom injection request may instruct injection infrastructure 620 to run a symptom-injector that generates anomalous DNS traffic on a device. This anomalous DNS traffic, as generated by the symptom-injector, may be analyzed by the analytic with insufficient performance data, thus generating additional performance data to be stored within performance data store 580.

In an example, symptom-injector store 630 may store symptom injectors, including descriptors of stored symptom injectors. Responsive to receiving a symptom injection request from sampling orchestrator 610, injection infrastructure 620 may retrieve a symptom injector that corresponds to the symptom injection request from symptom-injector store 630. Injection infrastructure 620 may then deploy the retrieved symptom injector, for example on enterprise system 650.

Any number of techniques may be employed for injection infrastructure 620 to deploy a symptom injector on enterprise system 650. For example, injection infrastructure 620 may use model-based symptom-injection, or injection infrastructure 620 may mimic tools typically used for attacking a system. Injection infrastructure 620 may also deploy symptom injections in the form of malware, or malware whose real attack functionality has been removed, i.e. defanged malware samples. Injection infrastructure 620 may use any number of other techniques for deploying a symptom injector and a symptom injector may include any combination of these techniques. Additionally, a symptom injector may take any number of forms, including a model-based symptom, virtual machine, container, etc., and may be deployed to user machines, servers, infrastructure elements *e.g.* switches, dedicated machines, etc.

In an example, sampling orchestrator 610 can monitor alerts raised by an analytic of active analytics 460 against an injected symptom to determine whether an analytic, such as the analytic with insufficient performance data, has raised an alert responsive to the injected symptom. When an alert has been raised by the analytic with insufficient performance data, a quality-indicator of the analytic having insufficient performance data may be increased to indicate a higher quality. Conversely, when the analytic with insufficient performance data fails to generate an alert, the quality-indicator of the analytic having insufficient performance data may be decreased to indicate a lower quality. In an example, the quality-indicator of the analytic having insufficient performance data is flagged or otherwise made distinguishable from quality indicators not manipulated by a symptom-injection to indicate that the quality-indicator was effected by the symptom-injection. Flagged quality-indicators may signify a greater level of accuracy, or may signify that a symptom injection has already been performed for the respective analytic having insufficient performance data.

Turning back to FIG. 5, performance and quality driver 514 may refer to flagged or unflagged quality indicators within performance data store 580 to identify an active analytic not meeting a performance threshold. The analytic may not meet the performance threshold due to the analytic having high CPU requirements, low detection quality, *e.g.* due to a high false positive rate output by the analytic, failing to generate an alert responsive to a symptom injection, etc, and this failure to meet the performance threshold may be indicated by a quality indictor corresponding to the analytic. When the analytic fails to meet the performance threshold, performance and quality driver 514 may initiate a change request to have the analytic removed from threat-detection pipeline 470. Performance and quality driver 514 may also search analytic data store 406 for an inactive available analytic to replace the removed analytic. In the search for a replacement analytic, performance and quality driver 514 may consider the descriptors of inactive available analytics within analytic data store 406, *e.g.* the deployment status of an analytic, the type of analytic, the code of an analytic, etc., in order to determine an appropriate replacement analytic for optimizing threat detection. In an example, performance and quality driver 514 may initiate a change request and adaptation module 420 may search for the replacement analytic responsive to the change request.

Performance and quality driver 514 may similarly initiate a change request to have a pre-processor failing to meet a performance threshold removed from threat detection pipeline 470. The performance and quality driver 514 may search pre-processor data store 404 for an inactive available pre-processor to replace the removed pre-processor. In the search for a replacement pre-processor, performance and quality driver 514 may consider the descriptors of inactive available pre-processors within pre-processor data store 404, *e.g.* the deployment status of a pre-processor, the type of pre-processor, the code of a pre-processor, etc., in order to determine an appropriate replacement pre-processor for optimizing threat detection. In an example, performance and quality driver 514 may initiate a change request and adaptation module 420 may search for the replacement pre-processor responsive to the change request.

Threat modelling driver 516 is another example driver for determining which pre-processors or analytics may be added or removed from threat-detection pipeline 470. As shown in system 500, threat modelling driver 516 may be in communication with threat modelling component 590. As described above, a threat model may model an identified threat, which may define the states or phases in which an attack on a system may be conducted. Threat modelling component 590 may model potential threats for threat identification within a system, *e.g.* an enterprise system.

A threat model created by threat modelling component 590 may be analyzed by an analytic. Threat modelling driver 516 may identify a threat *e.g.* in the form of a threat model created by threat modelling component 590, and may identify an analytic from analytic data store 406 for analyzing the identified threat. When the identified analytic is available but inactive, threat modelling driver 516 may initiate a change request. The deployment status of the identified analytic may be changed, *e.g.* by adaptation module 420, from inactive to active responsive to the change request.

In an example, threat modelling driver 516 may identify from analytic data store data in analytic data store 406 an analytic that is not analyzing any of the threat models from threat modelling component 590. Responsive to determining that the identified analytic is idle, threat modelling driver 516 may initiate a change request and the identified analytic may be deactivated, *e.g.* by the adaptation module 420 changing the deployment status of the analytic from active to inactive. Accordingly, threat modelling driver 516 may identify a threat model from threat modelling component 590 and determine whether analytics may be activated or deactivated based on the identified threat model.

Interface driver 518 is another example driver for determining which pre-processors or analytics may be added or removed from threat-detection pipeline 470. In an example, interface driver 518 has an interface for a user to initiate a change request. Specifically, a user interface, *e.g.* in the form of a graphical user interface, may be presented to a user to allow a user to view available data sources, available pre-processors, and available analytics. Interface driver 518 may enable a user to initiate a change request to change the availability of a data source, or the deployment status of a pre-processor or analytic. The adaptation module, as executed by a processor, may change the availability of a data source, or the deployment status of a pre-processor or analytic responsive to the change request. A user may thus override the autonomous addition or removal of data sources, pre-processors, or analytics from threat-detection system 500.

Any number of pluggability components may also be included in the threat-detection system. Example system 500 depicts two such pluggability components, including first pluggability component 522 and second pluggability component 524. A pluggability component may be any combination of hardware and/or software, and may be aware of any interface supported by threat-detection pipeline 470, such as an application program interface (API). A pluggability component may facilitate communication between adaptation module 420, as executed by a processor, and the available pre-processors or the available analytics. In this example, first pluggability component 522 may facilitate communication between the available pre-processors and second pluggability component 524 may facilitate communication between the available analytics.

First pluggability component 522 may execute the deployment or removal of a pre-processor from threat-detection pipeline 470, and second pluggability component 524 may execute the deployment or removal of an analytic from threat-detection pipeline 470. For example, when adaptation module 420 changes the deployment status of one of the active pre-processors 440 from active within the threat-detection pipeline to inactive, first pluggability component 522 may remove the inactivated pre-processor from threat-detection pipeline 470. Likewise, when adaptation module 420 changes the deployment status of an analytic from inactive to active within threat-detection pipeline 470, second pluggability component 524 may add the activated analytic to the active analytics 460 in threat-detection pipeline 470.

In an example, first pluggability component 522 or second pluggability component 524 may ensure compatibility of a pre-processor or analytic within threat-detection pipeline 470 prior to adding a pre-processor or analytic to threat-detection pipeline 470. Specifically, first pluggability component 522, as executed by a processor, may retrieve a descriptor of a pre-processor to be added to threat-detection pipeline 470, such as code of the pre-processor to be added to the threat-detection pipeline, from pre-processor data store 404. Similarly, second pluggability component 524, as executed by a processor, may retrieve a descriptor of an analytic to be added to threat-detection pipeline 470, such as code of the analytic to be added to the threat-detection pipeline, from analytic data store 406. In an example, adaptation module 420, as executed by a processor, retrieves code from pre-processor data store 404 or analytic data store 406 and provides the code to the first or second pluggability component, 522, or 524 respectively. Using the code retrieved from pre-processor data store 404, or pre-processor data store 406, first pluggability component 522 or second pluggability component 524 may run a compatibility check on a pre-processor or analytic to be added to threat-detection pipeline 470, such as the ability of a pre-processor to pre-process data from available data sources 430 when added to threat-detection pipeline 470, or the ability of an analytic to analyze pre-processed data from active pre-processors 440 for threats when added to threat-detection pipeline 470.

All of the features disclosed in this specification (including any accompanying claims, abstract and drawings), and/or all of the elements of any method or process so disclosed, may be combined in any combination, except combinations where at least some of such features and/or elements are mutually exclusive.

In the foregoing description, numerous details are set forth to provide an understanding of the subject disclosed herein. However, various examples may be practiced without some or all of these details. Some examples may include modifications and variations from the details discussed above. It is intended that the appended claims cover such modifications and variations.

## Claims

1. A threat-detection system comprising:
a data source data store comprising descriptors of available data sources in a threat-detection pipeline;
a pre-processor data store comprising descriptors of available pre-processors, including a deployment status of a pre-processor of the available pre-processors to indicate an active status of the pre-processor in a threat detection pipeline;
an analytic data store comprising descriptors of available analytics, including a deployment status of an analytic of the available analytics to indicate an active status of the analytic in the threat-detection pipeline; and
a processor to execute instructions in memory, the executable instructions to:
update the data source data in the data source data store, the pre-processor data in the pre-processor data store, or the analytic data in the analytic data store;
initiate a change request responsive to a change in the data source data, pre-processor data, or analytic data; and
change the deployment status of the pre-processor or the analytic responsive to the change request.

2. The threat-detection system of claim 1, wherein,
the descriptors of the data source data comprise a type of data source, the descriptors of the pre-processor data comprise a type of data source a pre-processor of the available pre-processors operates on, and the descriptors of the analytic data comprise a type of data source an analytic of the available analytics operates on.

3. The threat-detection system of claim 2, wherein the change in the data source data, pre-processor data, or analytic data is responsive to a newly available data source in the threat-detection pipeline, and
wherein responsive to the initiated change request the processor executes instructions in the memory to:
search for an inactive pre-processor of the available pre-processors sharing a type with the newly available data source, and
change the deployment status of the inactive pre-processor of the available pre-processors to active in the threat-detection pipeline responsive to the newly available data source in the data source data.

4. The threat-detection system of claim 1, wherein the change in the data source data, pre-processor data, or analytic data is a newly available analytic in the analytic data, and
wherein responsive to the initiated change request the processor executes instructions in the memory to change the deployment status of the newly available analytic to active.

5. The threat-detection system of claim 1, wherein the change in the data source data, pre-processor data, or analytic data is a data source, pre-processor, or analytic removed from the threat-detection pipeline, and
wherein the adaptation module changes the deployment status of the pre-processor of the available pre-processors or the analytic of the available analytics from active in the threat-detection pipeline to inactive responsive to the change in the data source data, pre-processor data, or analytic data.

6. The threat-detection system of claim 1, further comprising a pluggability component to facilitate communication between the processor and the available pre-processors or the available analytics.

7. The threat-detection system of claim 1, further comprising a pluggability component to run a compatibility check on the pre-processor of the available pre-processors or the analytic of the available analytics.

8. The threat-detection system of claim 7, wherein the processor, responsive to the initiated change request, executes instructions in the memory to:
retrieve code of the pre-processor or the analytic from the pre-processor data store or analytic data store; and
provide the code to the pluggability component.

9. The threat-detection system of claim 1, wherein the processor, responsive to the initiated change request, executes instructions in the memory to retrieve a descriptor of a newly activated pre-processor or analytic from the pre-processor data store or analytic data store to determine a dependency of the pre-processor or the analytic.

10. The threat-detection system of claim 1, further comprising an interface driver having an interface for a user to initiate a change request, and wherein the processor, responsive to the change request, changes the deployment status of a pre-processor of the available pre-processors or an analytic of the available analytics.

11. A method comprising:
updating, by a processor, an analytic data store comprising descriptors of available analytics, the descriptors including a deployment status of the available analytics, wherein the available analytics are to analyze prepared data in the threat-detection pipeline for threat detection;
identifying, by the processor, a threat and, responsive to the threat, an available analytic from the analytic data store;
initiating, by the processor, a change request based on the identified available analytic; and
changing, by the processor, the deployment status of the identified available analytic responsive to the change request.

12. The method of claim 11, wherein the threat is identified from a threat model of a threat-modelling component coupled to a driver.

13. The method of claim 11, wherein the change request is a request to:
activate, into the threat detection pipeline, the identified available analytic; or
deactivate the identified available analytic.

14. The method of claim 11, wherein the threat-detection pipeline includes an allocated resource space for pre-processing data of available data-sources and analyzing the pre-processed data for threat-detection.

15. A non-transitory computer-readable medium comprising instructions executable by a processor to:
update data source data comprising descriptors of available data sources in a threat-detection pipeline;
update pre-processor data comprising descriptors of available pre-processors, including a deployment status of the available pre-processors;
update analytic data comprising descriptors of available analytics, including a deployment status of the available analytics;
identify a change in the data source data, pre-processor data, or analytic data; and
change the deployment status of a pre-processor of the available pre-processors or an analytic of the available analytics responsive to the identified change.
